# EUROPEAN PATENT APPLICATION

(11) **EP 2 124 026 A2**
(43) Date of publication of application: **25.11.2009**
(21) Application number: 09160773.9
(22) Date of filing: 20.05.2009
(51) Int. Cl.: G01G 13/24

(54) **Automatic weighing apparatus with buckets**

(30) Priority: 22.05.2008 IT MI20080950
(71) Applicant: ILAPAK INTERNATIONAL S.A., 6926 Collina d'Oro (CH)
(72) Inventor: Perugini, Gianni, 52043 Castiglion Fiorentino AR (IT); Badini, Raul, 52043 Castiglion Fiorentino AR (IT); Alessandri, Alessandro, 52100 Arezzo AR (IT)
(74) Representative: De Gregori, Antonella

(57) **Abstract**

An apparatus with buckets for weighing products comprises at least a weighing group formed by a bucket cascade which dump into each other on command, the cascade receiving products to be weighed from upper feeding means (11) and dumping onto a lower outlet chute (14), with at least one bucket of the cascade being equipped with a bucket weighing unit (15). The cascade is formed by a first dosing bucket (12) and by a second weighing bucket (13). The weighing bucket is made with two half-buckets positioned next to each other (13a, 13b), weighed altogether by one same weighing unit (15) and each equipped with a respective lower discharge (17, 18). The two lower discharges (17, 18) are alternatively commanded by one same first actuator (19) to dump on command onto the outlet chute (14). The dosing bucket (12) receives products from the feeding means (11) and is equipped with two lower discharges (20, 21) alternatively commanded by one same second actuator (22) to dump the products on command in one or other of the two half-buckets (13a, 13b). The first and second actuator (19, 22) and the weighing unit (15) are connected to a control unit (24) for controlling operating cycles of the apparatus. A local control unit (24) is connected to a central control unit (65). The Central control unit, based upon the data received from all the local units (24) on-board the weighing scales, decides the ideal opening combination in order to obtain the desired weight.

## Description

The present invention refers to an automatic weighing apparatus with buckets.

In the field, automatic weighing apparatuses with buckets are known, in which the products to be weighed reach the apparatus in various ways (for example, through vibrating channels) to fall into a sequence of buckets having a bottom able to open into each other. The automatic weighing scales with buckets generally comprise a loop of weighing groups each formed by a chain of buckets in cascade.

Usually, an intermediate bucket of the cascade (called "weighing bucket") is supported through load cells to weigh the product in it, whereas a bucket (called "dosing bucket") before it, carries out the dosage of the incoming products and a bucket (called "memory bucket") after it, contains the weighed products until the correct moment of release on a dumping plane, according to a conventional solution, alternatively in the chute or in an underlying memory bucket. In this way a known weight is stored inside the memory bucket until it is thought suitable to use it in combination with other buckets. In an even more advanced solution, the weighing bucket can dump into two underlying independent memory buckets, so as to further optimize the weighing cycle. According to this last version, the alternated dumping is obtained through the use of two trapdoors positioned next to each other which make the bottom of the weighing bucket, with each trapdoor dumping into one of the two underlying memory buckets arranged next to each other. With this kind of structure, the height of the weighing scales is however relatively high. Moreover, the series of drops in cascade can ruin delicate products.

Weighing scales have been proposed, in which the memory bucket has been eliminated and instead of it, two weighing buckets are used that are arranged next to each other and into which a same dosing bucket, arranged above and astride of both of them, dumps. This allows the height of the weighing scales to be reduced compared to the solution with three overlapping buckets, and it also allows the number of drops in cascade to be reduced. However, with such a structure the space taken up in plan is greater due to the two weighing buckets that are independent and next to each other. Moreover, the use of two weighing buckets substantially increases the complexity and the cost of the weighing scales. For example, a complete load cell weighing system for each bucket next to each other is necessary. Furthermore, the use of two independent dumping actuations of the weighing buckets served by one same dosing bucket also means further costs and complications. Especially in the case of weighing scales equipped with a loop of independent weighing groups, the bulk and the cost can rapidly become unacceptable. The complexity of making and controlling the known systems is obvious, also considering that the dosing bucket has two independently commanded dumping trapdoors, in other words each with a dedicated actuation. Pairs of trapdoors with a single actuation have been in some cases proposed with other structures and bucket sequences, but without integrating this with a general simplification of the weighing and control system, and therefore not obtaining a more satisfactory weighing cycle.

The general purpose of the present invention is to avoid the aforementioned drawbacks by providing an automatic weighing apparatus with buckets which has a more satisfactory complexity, bulk and weighing cycle compared to that of the

### prior art.

In view of such a purpose it has been thought to make, according to the invention, an apparatus with buckets for weighing products, comprising at least one weighing group formed by a cascade of buckets which dump into each other on command, the cascade receiving products to be weighed from upper feeding means and dumping onto a lower outlet chute, with at least one bucket of the cascade being equipped with a bucket weighing unit, **characterized in that** the cascade is formed by a first dosing bucket and a second weighing bucket, the weighing bucket being made with two half-buckets positioned next to each other, weighed altogether by one same weighing unit and each equipped with a respective lower discharge, the two lower discharges being alternatively commanded by one same first actuator to dump on command onto the outlet chute, the dosing bucket receiving products from the feeding means and being equipped with two lower discharges alternatively commanded by one same second actuator to dump the products on command in one or other of the two half-buckets, the first and second actuator and the weighing unit being connected to a control unit for commanding operating cycles of the apparatus.

In order to further clarify the explanation of the innovative principles of the present invention and its advantages compared to the prior art, with the help of the attached drawings, a possible embodiment in which such principles are applied shall be described hereafter. In the drawings:
- figure 1 represents a schematic view of a weighing apparatus with buckets according to the invention;
- figures 2-6 represent weighing sequences carried out with the apparatus of figure 1;
- figure 7 represents a schematic perspective view of an embodiment of the buckets of a weighing group according to the invention;
- figure 8 represents a view from the top of one side of the group of figure 7 in a first open condition;
- figure 9 represents a top view of the other side of the group of figure 7 in a second open position.

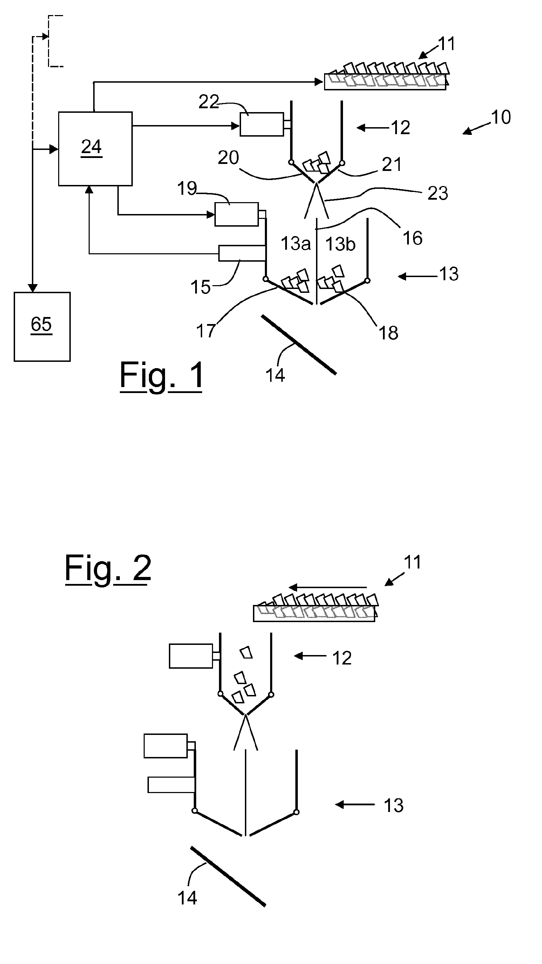

With reference to the figures, in figure 1 a weighing apparatus is schematically shown generically indicated with 10. For the sake of simplicity, only a single weighing group is shown. There can be further equivalent weighing groups of the apparatus, arranged for example, as a loop, as a man skilled in the art could easily imagine for combination weighing.

The apparatus 10 comprises means 11 for commanded feeding of products to be weighed. As a man skilled in the art could easily imagine, such means 11 can be made with any suitable known product feeding system. For example, a vibrating channel can be advantageously used. The inlet 11 dumps the products into a first bucket 12 of the weighing group. Under such a first bucket there is a second bucket 13, which dumps in turn onto a discharge plane 14 exiting the weighing scales.

The bucket 13 makes the weighing bucket and is supported by a weighing unit 15, advantageously with load cells, which carries out the weighing of the entire bucket with its content. Such a weighing bucket 13 is divided into two halves by a vertical partition 16 and each half has a respective discharge or trapdoor 17, 18 at the bottom. The two trapdoors are able to be opened alternately through a single actuation 19. For such a purpose, the actuation comprises an electric motor kinematically connected to open one trapdoor or the other according to the direction of rotation of the motor.

The upper bucket 12 makes the dosing bucket and for such a purpose it is equipped with two discharges or trapdoors 20, 21 also selectively able to be opened through an actuation 22, substantially analogous to the actuation 19, with a single electric motor kinematically connected to open one trapdoor or the other according to the direction of rotation of the motor.

Each trapdoor 20, 21 dumps into a respective half of the weighing bucket 13. A conveying deflector 23 can advantageously be at the centre line of the bucket between the trapdoors 20 and 21 to direct the products to be weighed safely into the correct half of the bucket 13.

The dosing bucket can therefore dump into the weighing half-bucket on the right or on the left according to which trapdoor the motor 22 opens by rotating in a clockwise or anti-clockwise direction. Similarly, the single motor 19 can open the weighing half-bucket on the right or on the left according to whether the rotation is clockwise or anti-clockwise. One single load cell 15 weighs the content of the two half-buckets (indicated with 13a and 13b). The two half-buckets take advantage of the common wall 16 and are part of a single mechanical structure.

A suitable local control unit 24 (for example, with a suitably programmed microprocessor) controls the operative sequence and the measuring signals of the weighing. Such a local unit 24 responds to a main control unit 65 which has the function of coordinating the operation of all the units 24 on board the weighing scales. The main control unit 65, based upon the data received from all the local units 24 present on board the weighing scales (mainly the data inherent to the weights of the product in each bucket 13a, 13b), decides the opening combination in order to obtain the desired weight and consequently controls the control units 24. The opening operation is then once again delegated to the single local units.

The control units 24 and 65 are in any case *per se* easily imagined by a man skilled in the art, especially based upon the following description of the operation of the weighing apparatus. Therefore, they shall not be described or shown in detail any further. Nevertheless, it is obvious, also from the rest of the description, that using only two motors and a single weighing unit with load cell for each weighing group substantially simplifies the problems of managing and controlling the weighing scales. The control unit 24 can therefore be simpler compared to the prior art of weighing scales with buckets.

Starting from figure 2 a weighing sequence is shown. In figure 2, the feeding means 11 dump a dose of products into the dosing bucket, initially empty.

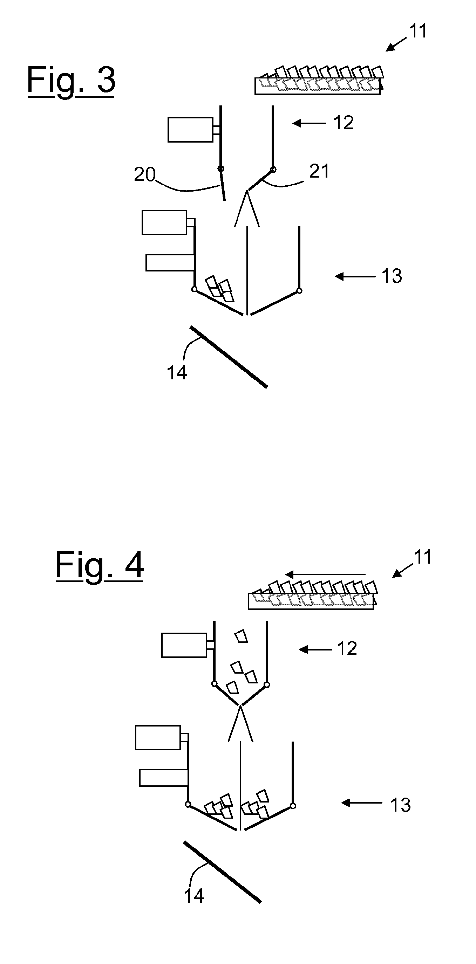

After this, the control unit commands the rotation of the motor 22 and the dosing bucket dumps into a weighing half-bucket (for example, the one on the left in figure 3). Through the load cell 15, the control system detects the weight of the product dumped and stores it.

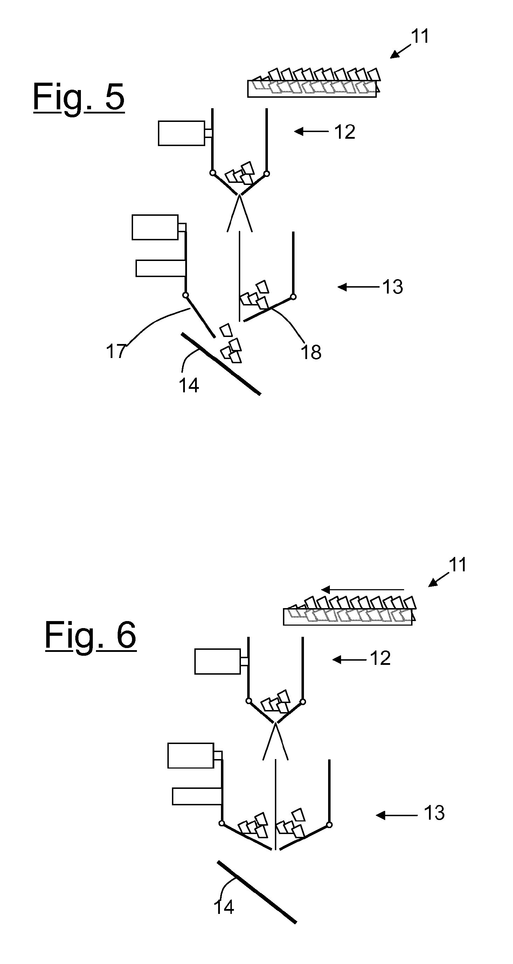

Thereafter, the inlet feeding means 11 are commanded to drop a new dose into the dosing bucket 12, which in the meantime has closed. In the opposite direction, the control unit commands the motor 22 of the dosing bucket to dump the products into the other weighing half-bucket (on the right in the example). The control system, through the load cell 15, detects the total weight of the two half-buckets and, by subtracting the previous weight of the product in the first half-bucket, it obtains the weight present in the second half-bucket. In this way, two half-buckets are obtained, having two ready weights. In the meanwhile, the inlet feeding means 11 can dump a new dose into the dosing bucket, as schematically shown in figure 4. The situation schematically shown in figure 1 is thus obtained, with two set weights ready to be dumped into the outlet into the half-buckets and the dosing bucket ready to replace the weight which will be sent in combination to the outlet. When a half-bucket is made to dump (figure 5), the system takes care of restoring the weight in the emptied half-bucket by withdrawing it from the dosing bucket which will be filled again from the inlet 11 (figure 6). All of this with simple commands by the control unit 24. It is obvious, to the man skilled in the art, how the automatic weighing apparatus with a plurality of weighing groups as described, can carry out the known weighings in combination, with combined emission of weighed products in half-buckets of different groups.

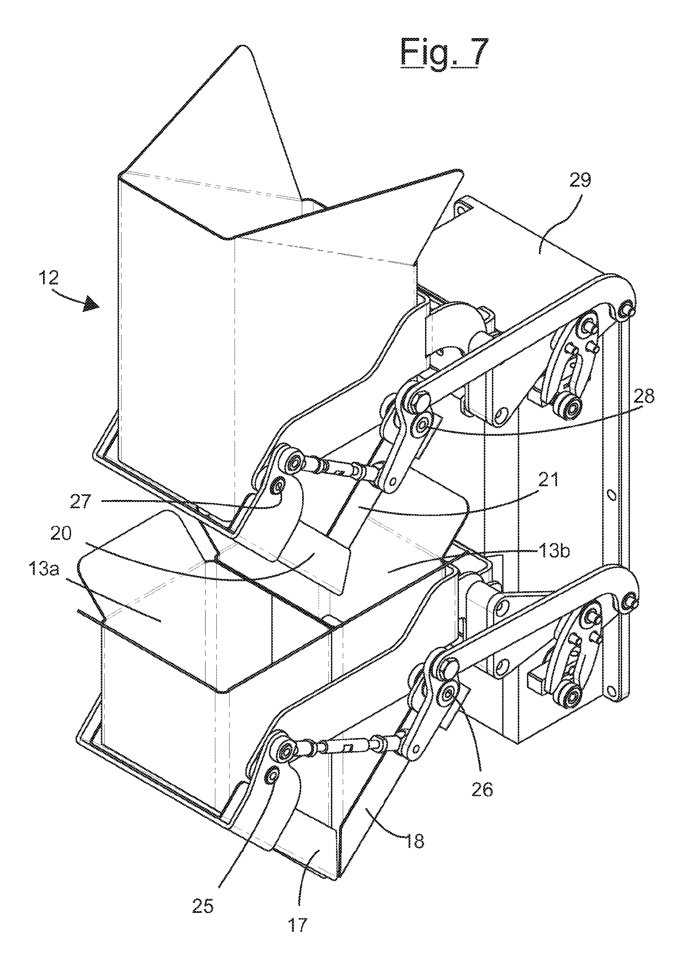

Figure 7 shows an embodiment found to be particularly advantageous of the buckets 12 and 13 on top of each other with the actuation mechanisms of the trapdoors.

The trapdoors 17, 18 are hinged to the half-buckets 13a and 13b through respective doweling rods 25, 26. The trapdoors 20 and 21 are hinged to their own bucket 13 through respective doweling rods 27, 28. In such an embodiment there is no conveyer 23 and the safe directing into the two half-buckets is obtained through trapdoors 20 and 21 of different lengths.

The motors 19 and 22 are contained in a motor box 29 with motorized rotation rods which protrude out from its two sides and which command, with suitable kinematisms, the opening and closing movements of the trapdoors. The box 29 also supports the group of buckets.

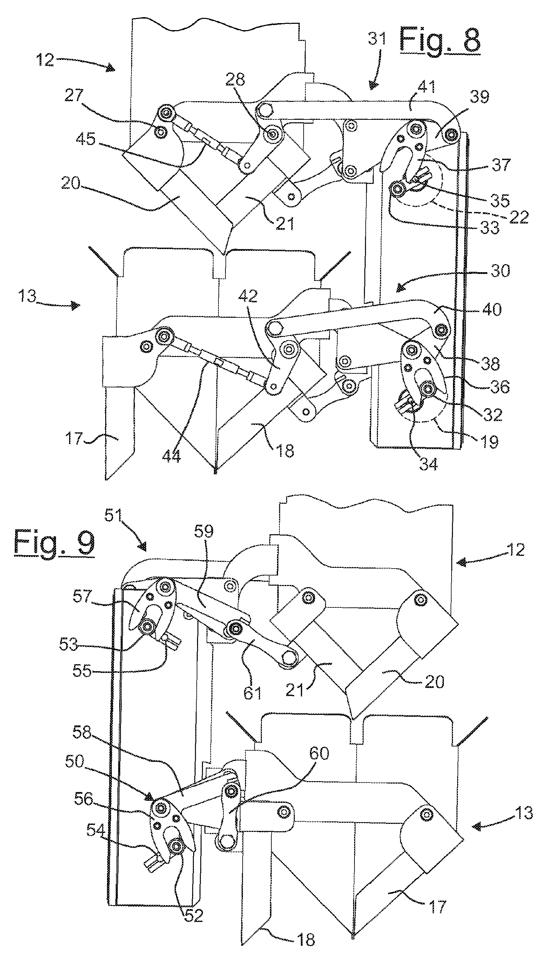

Figure 8 shows the side of the two kinematisms 30 and 31, substantially the same as one another, for independently commanding the trapdoors 17 and 20, respectively. The kinematism 30 is shown in the open condition of the trapdoor, whereas the kinematism 31 is shown in the closed condition.

Each kinematism 30, 31 comprises its own cam element 32, 33 which is supported and made to rotate by a respective shaft 34, 35, actuated by the corresponding motor 19 or 22. As can be seen from the comparison of the two kinematisms, each cam element in its rotation is made to interfere for a portion with a corresponding forked element 36, 37, so as to shift it between the position shown for the kinematism 31 and the position shown for the kinematism 30. Through suitable transmissions, the movement of the fork makes the corresponding trapdoor open and close. In particular, from the resting position (trapdoor closed), a clockwise rotation of the shaft 34 or 35 makes the mechanisms open the trapdoor 17 or 20. A subsequent opposite rotation closes the trapdoor again.

In particular, the fork (36 or 37) is fixed to a first bell crank (38 or 39) which commands the rotation of the trapdoor (17 or 20) through a kinematic chain formed by a tie-rod (40 or 41), a second bell crank (42 or 43) and a second tie-rod (44 or 45), advantageously with adjustable length.

Figure 9 shows the opposite side of the group with respect to the aforementioned kinematisms 30, 31. On such an opposite side there are two other kinematisms 50 and 51, substantially the same as each other, of for independently commanding the trapdoors, 18 and 21 respectively.

The kinematism 50 is shown with the trapdoor 18 in its open condition, whereas the kinematism 51 is shown with the trapdoor 21 in its closed condition.

The kinematisms 50, 51 also comprise their own cam elements, respectively indicated with 52 and 53. Such cam elements 52 and 53 are supported and made to rotate by respective shafts 54 and 55. The shafts 54 and 55 fixedly turn as a unit with the shafts 34 and 35 on the other side of the weighing group, being connected to the same motor, so that a clockwise rotation of the shaft on one side of the group corresponds to an anti-clock wise rotation of the shaft on the other side and vice-versa.

As it can be seen by comparing the two kinematisms 50 and 51, each cam element 52 and 53 in its rotation is made to interfere for a portion with a corresponding forked element 56, 57, so as to shift it between the position shown for the kinematism 51 and the position shown for the kinematism 50. Through suitable transmissions, the movement of the fork causes the opening and closing movement of the corresponding trapdoor. In particular, from the resting position (trapdoor closed), a clockwise rotation of the shaft 54 or 55 makes the mechanisms open the trapdoor 18 or 21. A subsequent opposite rotation recloses the trapdoor.

In particular, the fork (56 or 57) is fixed to a first bell crank (58 or 59) which commands the rotation of the trapdoor (18 or 21) through a kinematic chain formed by a tie-rod (60 or 61).

By comparing figures 8 and 9, it is clear how the movement of the motors in one direction or the other makes the two trapdoors of one same bucket to alternately open and close. The cams and forks are angularly arranged so that the cams on one side of the group run along a portion interfering with its own forks when the cams on the other side run along a portion not interfering with its own forks and vice-versa.

It should be noted that the forks of the lower bucket do not interfere with the commanding mechanism when the bucket has the trapdoors in their closed position, so that it is possible to correctly weigh the bucket, which remains suspended at the support structure through the load cell 19 (not visible in figures 7-9).

At this point it is clear how the set purposes have been achieved. The system according to the invention comprises a single load cell which weighs both the half-buckets, so that the management of the weighings is simplified also allowing two weights to always be ready to dump. In the embodiment with only two motors, there is a simplification in the dump and in the dump controlling mechanisms, compared to the prior art. Moreover, the use of two half-buckets allows it to occupy less space on the ground compared to known solutions with separate buckets positioned next to each other. At the same time, the two half-buckets at the same level allow it to have a reduced height compared to the conventional solution with three buckets on top of each other. As well as reducing the height of the unit, the height from which the products fall is also reduced.

The operating speed is also improved. For example, to reload a half-bucket which has been emptied by a combination command, the dosing bucket provides for it directly, whereas in the case of a conventional solution, if it is the memory bucket that has been emptied, the content of the weighing bucket has to be dumped into it and then the dosing bucket refills the weighing bucket so that it can be ready to be combination command again. In the systems of the prior art there is thus in the case of the solution for which it is the weighing bucket that is involved in the combination, a lower number of available buckets to find the combination than that which can be obtained with the solution according to the present invention. Again in the prior art, in the case of two memory buckets fed by a weighing bucket, on the other hand, a series of extra cascade drops are generated which can damage fragile products.

The solution described according to the present invention (having a single motor to open the half-bucket on the right and on the left), has the apparent drawback that when one of the two half-buckets is made to respond to a combination command, the other one can no longer be considered in the same cycle, unless it is slowed down taking advantage of the possibility that the motor first opens one half-bucket and then, rotating in the opposite direction opens the other. From tests carried out, however, it has surprisingly been found that this, combined with the half-buckets with a single weighing unit, does not produce any practical limitation.

Such a result can be explained by the fact that the drawback consisting of not being able to access two contiguous half-buckets at the same time, for the same combination, is less significant than not being able to have an even number of buckets during the search of the combination.

Of course, the aforementioned description of an embodiment applying the innovative principles of the present invention is shown as an example of such innovative principles and must not therefore be taken to limit the scope of protection claimed here. For example, there can be any number of weighing groups next to each other. The two half-buckets can also be made with two single buckets coupled together and weighed simultaneously by a same weighing unit.

## Claims

1. Apparatus with buckets for weighing products, comprising at least one weighing group formed by a bucket cascade which dump into each other on command, the cascade receiving products to be weighed from upper feeding means (11) and dumping onto a lower outlet chute (14), with at least one bucket of the cascade being equipped with a bucket weighing unit (15), **characterized in that** the cascade is formed by a first dosing bucket (12) and by a second weighing bucket (13), the weighing bucket being made from two half-buckets positioned next to each other (13a, 13b), weighed altogether by one same weighing unit (15) and each equipped with a respective lower discharge (17, 18), the two lower discharges (17, 18) being alternatively commanded by one same first actuator (19) to dump on command onto the outlet chute (14), the dosing bucket (12) receiving products from the feeding means (11) and being equipped with two lower discharges (20, 21) alternatively commanded by one same second actuator (22) to dump the products on command into one or other of the two half-buckets (13a, 13b), the first and second actuator (19, 22) and the weighing unit (15) being connected to a control unit (24) for controlling operating cycles of the apparatus.

2. Apparatus according to claim 1, **characterized in that** the control unit (24) is configured to determine the weights of a first and second quantity of products fed into the half-buckets (13a, 13b) by the dosing bucket (12), through: detection, through the weighing unit (15), of the weight of the first quantity of product dumped from the dosing bucket (12) into a half-bucket (13a or 13b), with the other one (13b or 13a) empty; control of the dosing bucket (12) to dump the second quantity of product into the other half-bucket; detection, through the weighing unit (15), of the total weight of the first and second quantities and subtracting the detected weight of the first quantity from the total weight, so as to also obtain the weight of the second quantity.

3. Apparatus according to claim 1, **characterized in that** the feeding means comprise a vibrating channel (11) commanded by the control unit (24).

4. Apparatus according to claim 1, **characterized in that** the discharges of the half-buckets comprise a trapdoor (17, 18) for each half-bucket, an electric motor (19), which makes the first actuator, being kinematically connected to the trapdoors to alternatively open one or the other trapdoor according to the rotation direction of the motor.

5. Apparatus according to claim 1, **characterized in that** the two discharges of the dosing bucket each comprise a trapdoor (20, 21), an electric motor (22), which makes the first actuator, being kinematically connected to the trapdoors to alternatively open one or the other trapdoor according to the rotation direction of the motor.

6. Apparatus according to claim 1, **characterized in that** the weighing unit comprises a load cell (15) for detecting the overall weight of the half-buckets.

7. Apparatus according to claim 1, **characterized in that** the two half-buckets are formed by a single bucket divided in half by a vertical wall (16).

8. Apparatus according to claim 4 or 5, **characterized in that** for the moving of a trapdoor, there is a kinematism (30, 31, 50, 51) between trapdoor and respective motor which comprises a cam element (32, 33, 52, 53) supported and made to rotate by a respective shaft actuated by the motor, to be taken for a portion of its rotation to interfere with a corresponding forked element (36, 37, 56, 57) and to shift it between two angular positions, a kinematic chain being connected between the forked element and the respective trapdoor to shift the trapdoor between its closed and open positions in relation to the two angular positions of the fork.

9. Apparatus according to claim 8, **characterized in that** the two trapdoors (17, 18 or 20, 21) of one same bucket are moved by two kinematisms (30, 31 or 50, 51) placed on opposite sides of the weighing group, the cam elements (32, 33, 52, 53) of the two kinematisms being supported and rotated by shafts, fixed together and projecting out on such opposite sides of the weighing group, with the cam element on one side travelling along a portion interfering with the respective fork whereas the cam element on the other side travels along a portion not interfering with the respective fork and vice-versa.

10. Apparatus according to claim 1, **characterized in that** it comprises a central control unit (65) which receives the weighing data from a plurality of control units (24) each associated with a weighing group and controls the control units (24) for multiple dumps from the weighing group so as to obtain in combination a dump of a desired weight.
